Europäisches Patentamt

(19) European Patent Office

Office européen des brevets

(11) Publication number: **0 006 096**
A1

(12) . EUROPEAN PATENT APPLICATION

(21) Application number: 78101441.0

(51) Int. Cl.³: **C 08 L 27/24**

(22) Date of filing: 22.11.78

---

(30) Priority: 25.11.78 US 854961

(43) Date of publication of application: 09.01.80
Bulletin 80/1

(84) Designated Contracting States: BE DE FR GB

(71) Applicant: **Rohm and Haas Company, Independence Mall West, Philadelphia, Pennsylvania 19105 (US)**

(72) Inventor: **Lutz, John Thomas, 4401 Yates Road Glen Ashton Farms, Cornwell Heights, Pa. (US)**

(74) Representative: **Deufel, Paul et al, Patentanwälte MÜLLER-BORé-DEUFEL SCHÖN-HERTEL Siebertstrasse 4, D-8000 München 86 (DE)**

---

(54) **Composition and method for enhancing the impact resistance of chlorinated poly(vinyl chloride) and impact-modified chlorinated poly(vinyl chloride).**

(57) In the modification of the properties of thermoplastic polymers, a diene-based impact-modifying polymer and an antioxidant is used to retain the impact resistance, thermal and chemical stability of chlorinated poly(vinylchloride) over a suitable period of time.

PATENTANWÄLTE
MÜLLER-BORÉ · DEUFEL
SCHÖN · HERTEL
8 MÜNCHEN 85 · SIEBERTSTR. 4
TEL. (089) 474005 · TELEX 5-24285

0006096

S/R 14-225 EU

-1-

Composition and Method for Enhancing the Impact
Resistance of Chlorinated Poly(Vinyl Chloride) and
Impact-Modified Chlorinated Poly(Vinyl Chloride)

This invention relates to the impact modification of
thermoplastic polymers.

The invention is concerned with compositions and
methods for enhancing the impact resistance properties
of chlorinated poly(vinyl chloride) (CPVC) and with
impact-modified CPVC.

Chlorinated poly(vinyl chloride) without impact
modification is too brittle for many uses. A number of
materials have been used to modify the impact resistance
of CPVC such as chlorinated polyethylene and acrylic
modifiers, i.e. rubbery acrylate elastomers. Acrylic
modifiers can provide better impact resistance than
chlorinated polyethylene but they perform poorly in
chemical resistance tests. Diene-based modifiers have
been thought to be unsuitable for CPVC because a major use
of CPVC is in the manufacture of piping and CPVC containing such modifiers loses its impact strength on long term
exposure to hot water, such as in hot water pipes.

We have now found how to confer upon CPVC compositions improved impact strength which will not substantially degrade on long term hot water exposure or contact
with chemicals.

According to the invention there is provided a composition for enhancing the impact resistance properties of
chlorinated poly(vinyl chloride) characterized in that the composition comprises an impact modifying polymer containing units of at least one diene and from 0.5 to 20% by
weight of the impact modifying polymer of at least one
antioxidant.

Diene based impact modifiers are well known, any
of them can be used in this invention. Although such
modifiers are often prepared by processes using antioxidants to stabilize the polymer during isolation,
insufficient antioxidant remains after polymerization
and isolation to achieve the objectives of this invention.

Preferably the diene-based modifier contains units
of 1,3-butadiene, isoprene or chloroprene. The modifier
may be a simple copolymer or, more preferably, a multistage heteropolymer. In such multistage polymers the
first stage preferably comprises from 60 to 100% by
weight of diene units, preferably butadiene units. Other
types of modifiers which are suitable include those formed
from acrylonitrile, butadiene, styrene and optionally
methyl methacrylate. Preferably the impact modifying
polymer is a multistage heteropolymer having a first
elastomeric stage containing units of butadiene and styrene, one or more optional intermediate stages and a final
stage containing units of methyl methacrylate.

The diene based modifier may contain from 20 to 99%
by weight of diene units. The higher the level of diene,
the more effective is the impact modifier, but there are
upper limits to the amount of diene which can in practice
be incorporated into a given polymer.

The amount of diene-based impact modifier typically
used in this invention is from 1 to 20 percent by weight
of the chlorinated poly(vinyl chloride). Amounts below
about 1 percent do not give sufficient impact improvement
to made the addition worthwhile, and amounts above about
20 percent do not incrementally improve the impact strength
enough to compensate for reduction in heat deformation
resistance. Preferably amounts between about 5 and 15
percent are used and result in very significant, cost-
effective improvements in the impact strength of CPVC.

The antioxidant preferably comprises from 0.5 to 5% by weight of the impact modifying polymer. Preferably the antioxidant comprises at least one hindered phenol, substituted amine or hydrocarbyl phosphite. Examples of suitable antioxidants are listed in Table B herein. Hindered phenols are the most preferred group of antioxidants, in particular, 1,3,5-trimethyl-2,4,6-tris[3,5-di-tert-butyl-4-hydroxyphenyl]benzene, bisphenol A, octadecyl-3-[3',5'-di-tert.-butyl-4-hydroxyphenyl]propionate and 2,6-di-tert.-butyl-p-cresol. The antioxidant is usually added after polymerization and isolation of the impact modifier polymer.

The diene-based impact modifier/antioxidant composition of this invention is effective in preparing high impact strength, thermally and chemically stable CPVC compositions.

Thus the invention also provides a method of enhancing the impact resistance properties of chlorinated poly(vinyl chloride) which comprises blending from 5 to 25 parts by weight of the diene-based modifier/antioxidant composition described herein with 100 parts by weight of chlorinated poly(vinyl chloride).

The impact modified CPVC is also an aspect of this invention. Such compositions preferably comprise from 5 to 25 parts by weight of the diene-based modifier/antioxidant compositions described herein per 100 parts by weight of CPVC.

The compositions of the invention may contain other additives which are conventionally added to CPVC formulations, such as stabilizers, lubricants, opacifying agents, processing aids, colorants, pigments and dyes.

Some preferred embodiments of the invention will now be more particularly described in and by the following Examples, in which all parts and percentages are by weight.

EXAMPLE 1

To each of the diene-based impact modifiers listed in Table A is added 1 percent based on weight of modifier of one of the antioxidants listed in Table B. The antioxidants are blended with the previously prepared and isolated modifier polymers, and the blends are all found useful for modifying CPVC.

Table A - Impact Modifiers

| (1) | Bi/St/MMA//MMA/EA | : | 42/18/0//40/0 |
|---|---|---|---|
| (2) | Bd/St/MMA//MMA/EA | : | 50/15/0//35/0 |
| (3) | Bd/St/MMA//MMA/EA | : | 45/12/3//38/2 |
| (4) | Bd/St/MMA//MMA/EA | : | 50/15/5//26/4 |
| (5) | Bd/St/MMA//MMA/EA | : | 50/15/5//20/1 |
| (6) | Bd/St/MMA//MMA/EA | : | 40/15/8//15/22 |
| (7) | Bd/St/MMA//MMA/EA | : | 43/17/10//15/5 |
| (8) | Bd/St/MMA//MMA/EA | : | 45/19/6//8/22 |
| (9) | Bd/St//St//MMA/EA | : | 48/12//18//20/2 |
| (10) | Bd/St//St//MMA/EA | : | 40/17//10//28/5 |
| (11) | Bd/St/MMA//St//St/MMA/AN | : | 40/15/8//15//12/8/2 |
| (12) | Bd/St/MMA//St//St/MMA/AN | : | 45/18/7//10//15/4/1 |
| (13) | Bd/St/MMA/St//St/MMA/AN | : | 50/15/5//17/5/3 |
| (14) | IP/St/MMA//MMA/EA | : | 45/12/3//38/2 |
| (15) | CP/St//St//MMA/EA | : | 47/13//18//17/5 |

In the above Table, monomers copolymerized in a single stage are separated by a single slash, and each stage of polymerization is separated by a double slash with the first stage appearing first. The following abbreviations are used: butadiene = BD, styrene = St, methyl methacrylate = MMA, ethyl acrylate = EA, acrylonitrile = AN, isoprene = IP, and chloroprene = CP.

## Table B  -  Antioxidants

(1)  Diphenylamine

(2)  Octamine

(3)  phenyl-α-naphthylamine

(4)  phenyl-β-naphthylamine

(5)  N,N-Diphenyl-p-phenylenediamine

(6)  Di-p-methoxydiphenylamine

(7)  N-N'-Di-β-naphthyl-p-phenylene diamine

(8)  Aldol-α-naphthylamine

(9)  Acetaldehydeaniline

(10) 2,2,4-trimethyl-1,2-dihydroxyquinoline

(11) Hydroquinone monobenzyl ether

(12) 2,2-methylene-bis(4-methyl-6-tert. butylphenol)

(13) Trisnonyl phenyl phosphite

(14) Dilauryl thiodipropionate

(15) 1,3,5-trimethyl-2,4,6-tris[3,5-di-tert-butyl-4-hydroxyphenyl]benzene

(16) Bisphenol A

(17) Octadecyl-3-[3',5'-di-tert.-butyl-4-hydroxyphenyl] propionate

(18) 2,6-di-tert.-butyl-p-cresol

## EXAMPLE 2

Ten parts of the impact modifier (1) containing 1 percent of antioxidant (1) are blended with 100 parts of postchlorinated (to a total chlorine content of about 65%) polyvinyl chloride (CPVC) wherein the polyvinyl chloride, before post chlorination has an intrinsic viscosity of 1.08, a K value (DIN 53-726) of 67, and an Apparent Bulk Density (gms./cm.$^3$) of 0.69.

Also added to the blend are 0.5 parts calcium-zinc fatty acid stabilizer, 2.5 parts methyl tin mercaptide stabilizer, 0.25 parts oxidized polyethylene lubricant, 1 part $TiO_2$ pigment, and 2 parts of lubricating processing aid of the formula BA/St/MMA//MMA/BA/St:23/35/21//38/1/1.

The blend is milled for 5 minutes at 191°C and molded into 6.5" x 11.5" x 0.5" x 0.125" sheet for testing.  The Izod impact strength is very substantially improved, and is substantially retained over a 63 day hot water immersion test at 82°C.

EXAMPLE 3

Example 2 is repeated, except using modifier (2) and antioxidant (10) with similar results.

EXAMPLE 4

Example 2 is repeated except using modifier (3) and antioxidant (12) with similar results.

EXAMPLE 5

Example 2 is repeated except using modifier (7) and antioxidant (15) with similar results.

Claims:

1. A composition for enhancing the impact resistance properties of chlorinated poly(vinyl chloride) characterized in that the composition comprises an impact modifying polymer containing units of at least one diene and from 0.5 to -20% by weight of the impact modifying polymer of at least one antioxidant.

2. A composition as claimed in claim 1 wherein the impact modifying polymer is a multistage, sequentially produced polymer having a first stage containing units of butadiene and styrene, one or more optional intermediate stages and a final stage containing units of methyl methacrylate.

3. A composition as claimed in claim 1 wherein the impact modifying polymer is a multistage, sequentially produced polymer having a first stage containing from 60 to 100% by weight of units of butadiene.

4. A composition as claimed in any of claims 1 to 3 wherein the antioxidant comprises from 0.5 to 5% by weight of the impact modifying polymer.

5. A composition as claimed in any of claims 1 to 4 wherein the antioxidant comprises at least one hindered phenol, substituted amine or hydrocarbyl phosphite.

6. A composition as claimed in claim 5 wherein the antioxidant comprises at least one of 1,3,5-trimethyl-2,4,6-tris[3,5-di-t-butyl-4-hydroxyphenyl]benzene; bisphenol A; octadecyl-3-[3',5'-di-t-butyl-4-hydroxyphenyl]propionate and 2,6-di-t-butyl-p-cresol.

7. A composition as claimed in any preceding claim wherein the antioxidant is added to the impact modifying polymer after polymerization and isolation of said polymer.

0006096

8.    A method of enhancing the impact resistance properties of chlorinated poly(vinyl chloride) characterized
in that from 5 to 25 parts by weight of a composition
according to any of claims 1 to 7 is blended with 100
parts by weight of chlorinated poly(vinyl chloride).

9.    A chlorinated poly(vinyl chloride) composition
characterized in that the composition comprises from 5
to 25 parts by weight of a composition according to any
of claims 1 to 7 per 100 parts by weight of chlorinated
poly(vinyl chloride).

European Patent Office

**EUROPEAN SEARCH REPORT**

0006096

Application number

EP 78 10 1441

## DOCUMENTS CONSIDERED TO BE RELEVANT

| Category | Citation of document with indication, where appropriate, of relevant passages | Relevant to claim |
|---|---|---|
| X | <u>DE - A - 2 622 926</u> (KUREHA KAGAKU KOGYO)<br><br>* Page 5, paragraph 2 - page 10, paragraph 3; examples 1,2 *<br><br>-- | 1,2,4, 5,7-9 |
| X | <u>DE - A - 2 038 415</u> (MONTECATINI)<br><br>* Page 2, paragraph 4 - page 4, paragraph 2; examples 1-4 *<br><br>-- | 1,2,8, 9 |
| X | <u>DE - A - 2 041 420</u> (KANEGAFUCHI KAGAKU KOGYO)<br><br>* Page 3, paragraph 1 - page 7, paragraph 2; page 8, paragraph 3 *<br><br>-- | 1,2,8, 9 |
| X | CHEMICAL ABSTRACTS, 1974, vol. 81, 153485j<br>Columbus, Ohio, USA<br>MURAYAMA NAOHIRO: "Thermoplastic resin composition with excellent heat resistance, impact resistance, transparency and processability".<br><br>& JP - B - 73 42205 (KUREHA CHEMICAL)<br><br>* Whole article *<br><br>-- | 1,2,8, 9 |
| X | <u>GB - A - 1 186 747</u> (ICI)<br>* Page 1, line 52 - page 3, line 58; page 4, example *<br><br>---- | 1,2,4, 7-9 |

### CLASSIFICATION OF THE APPLICATION (Int. Cl.²)

C 08 L 27/24

### TECHNICAL FIELDS SEARCHED (Int.Cl.²)

C 08 L 27/24
        27/00
        51/04
        53/02

### CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| | | |
|---|---|---|
| The present search report has been drawn up for all claims | | |
| Place of search<br>The Hague | Date of completion of the search<br>16-03-1979 | Examiner<br>GERARDIN |

EPO Form 1503.1  06.78